# EUROPÄISCHE PATENTSCHRIFT

(11) **EP 0 543 274 B1**
(45) Veröffentlichungstag und Bekanntmachung des Hinweises auf die Patenterteilung: **13.05.1998**
(21) Anmeldenummer: 92119302.5
(22) Anmeldetag: 11.11.1992
(51) Int. Cl.: H04B 3/23

(54) **Verfahren und Anordnung zur Steuerung eines Restecho-Begrenzers**
Method and apparatus for controlling a residual echo limiter
Procédé et dispositif de commande d'un limiteur d'écho résiduel

(30) Priorität: 22.11.1991 DE 4138463
(43) Veröffentlichungstag der Anmeldung: 26.05.1993
(73) Patentinhaber: SIEMENS AKTIENGESELLSCHAFT, 80333 München (DE)
(72) Erfinder: Waretzi, Erhard, W-8013 Haar (DE)

(56) Entgegenhaltungen:
- EP-A- 0 164 159
- TELCOM REPORT, Bd.10, März 1987, ERLANGEN DE Seiten 82 - 87 KEMMESIS ET AL. 'ECHOKOMPENSATOR IN WELTWEITEN NACHRICHTENVERBINDUNGEN'

## Beschreibung

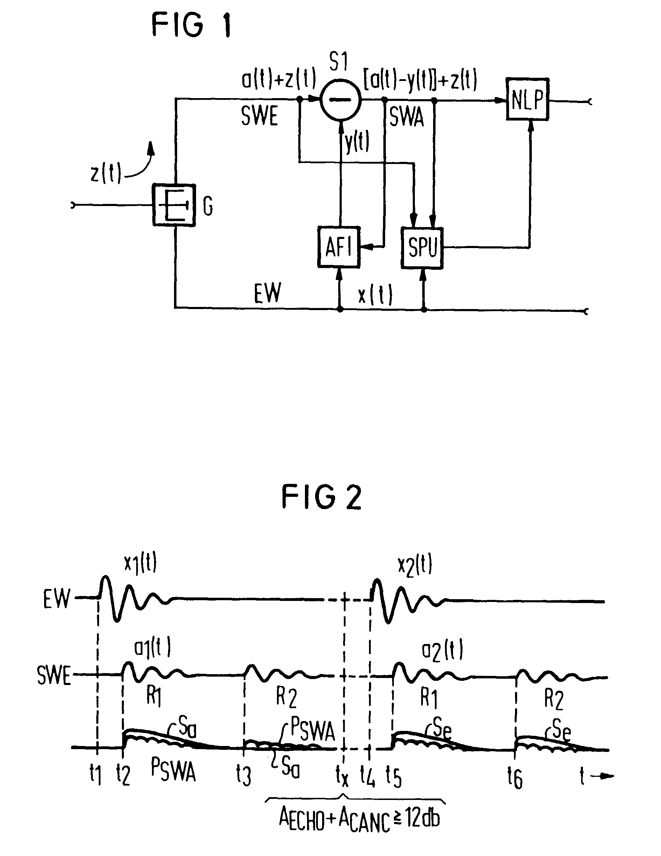

In dem Sonderheft "telcom report, Special, Multiplex- und Leitungseinrichtungen", 10 (1987) März, Seiten 82 bis 87, ist ein Echokompensator in weltweiten Nachrichtenverbindungen beschrieben. Dieser enthält, wie beiliegende Figur 1 zeigt, ein steuerbares Digitalfilter AFI, einen Subtrahierer S1, eine Steuerung SPU sowie einen Restechobegrenzer NLP und ist auf der Vierdrahtseite eines durch eine Gabel G gebildeten Zweidraht/Vierdraht-Übergangs angeordnet. Die Zweidrahtleitung führt zu einem nahen und die Vierdrahtleitung zu einem fernen Teilnehmer.

Vom Empfangswegsignal x(t) des fernen Teilnehmers gelangt über die Gabel G ein Echosignal a(t) auf den Sendewegeingang SWE. Zu diesem addiert sich ein Signalanteil z(t) vom nahen Teilnehmer. Das steuerbare Digitalfilter AFI stellt eine Nachbildung des Echoweges dar und erzeugt, während es vom Empfangswegsignal x(t) durchlaufen wird, ein künstliches Echosignal y(t). In dem Subtrahierer S1 wird dieses von den Signalteilen am Sendewegeingang SWE abgezogen. Eine Regelschaltung verstellt das steuerbare Digitalfilter AFI solange, bis das Signal am Ausgang des Subtrahierers S1 weitgehend frei von Echo ist.

Der Restechobegrenzer NLP beseitigt das verbleibende Restecho, indem er nur solche Signale zum Sendewegausgangs SWA gelangen läßt, die eine bestimmte Restecho-Begrenzerschwelle überschreitet. Diese wird von der Steuerung SPU immer so gelegt, daß sie gerade noch über dem Pegel des zu erwartenden Restechos bleibt. Der Restechobegrenzer NLP wird jedoch nur dann wirksam, wenn der ferne Teilnehmer spricht, auf keinen Fall aber während eines Doppelsprechens. Seine Wirkung ist mit der eines Schalters vergleichbar, der den Sendewegausgang SWA auftrennt, solange der ferne Teilnehmer allein spricht, und der diesen sofort schließt, wenn der nahe Teilnehmer spricht oder der ferne Teilnehmer schweigt.

Figur 2 zeigt ein zum Zeitpunkt t₁ beginnendes Empfangswegsignal x₁(t) und das dazugehörige, um die Endecho-Laufzeit t₂ - t₁ verzögertes Echosignal a₁(t) von einer ersten Reflexionsstelle R₁ in der Gabel G. Das dabei entstehende Restechosignal P_{SWA} wird von der aus dem Empfangswegsignal abgeleiteten Restecho-Begrenzerschwelle Sₐ überragt und somit vom Restechobegrenzer NLP unterdrückt. Eine zweite Reflexionsstelle R₂ in der Gabel G erzeugt ein weiteres Restechosingla P_{SWA}. Die gewünschte Anhebung der Restecho-Begrenzerschwelle Sₐ an dieser Stelle versagt jedoch.

In der europäischen Patentanmeldung 0 164 159 A1 ist ebenfalls ein Echokompensator mit einem Restechobegrenzer (écrêteur de centre) beschrieben.

Zur Steuerung des Restechobegrenzers wird das Verhältnis des kompensierten Signals und des unkompensierten Signals gebildet und überprüft, ob dieses Signal und das unkompensierte Signal zwischen vorgegebenen Schwellwerten liegt.

Der im Anspruch 1 angegebenen Erfindung liegt das Problem zugrunde, eine Restecho-Begrenzerschwelle auch für Mehrfachechos zu realisieren.

Der mit der Erfindung erzielte Vorteil besteht darin, daß das Restecho auch bei Zweitechos und weiteren Echos begrenzt wird. Vorteilhafte Ausgestaltungen der Erfindung sind den Ansprüchen 2 und 3 zu entnehmen. Anspruch 4 zeigt eine Möglichkeit, die Gesamtechodämpfung und die Kompensatordämpfung zu messen, und die Ansprüche 5 und 6 zeigen weitere Möglichkeiten der Ermittlung der Kompensatordämpfung auf. Anspruch 7 nennt die Merkmale einer Anordnung zur Durchführung des erfindungsgemäßen Verfahrens.

Ausführungsbeispiele der Erfindung sind in der Zeichnung dargestellt und werden im folgenden näher beschrieben.

Es zeigen
- Fig. 1: das bereits beschriebene Blockschaltbild eines bekannten Echokompensators,
- Fig. 2: Impulsdiagramme zur Erläuterung der Erfindung,
- Fig. 3: eine erfindungsgemäße Anordnung,
- Fig. 4: eine Anordnung zur Messung der Gesamtechodämpfung und der Kompensatordämpfung und
- Fig. 5 + 6: Anordnungen zur Messung der Kompensatordämpfung.

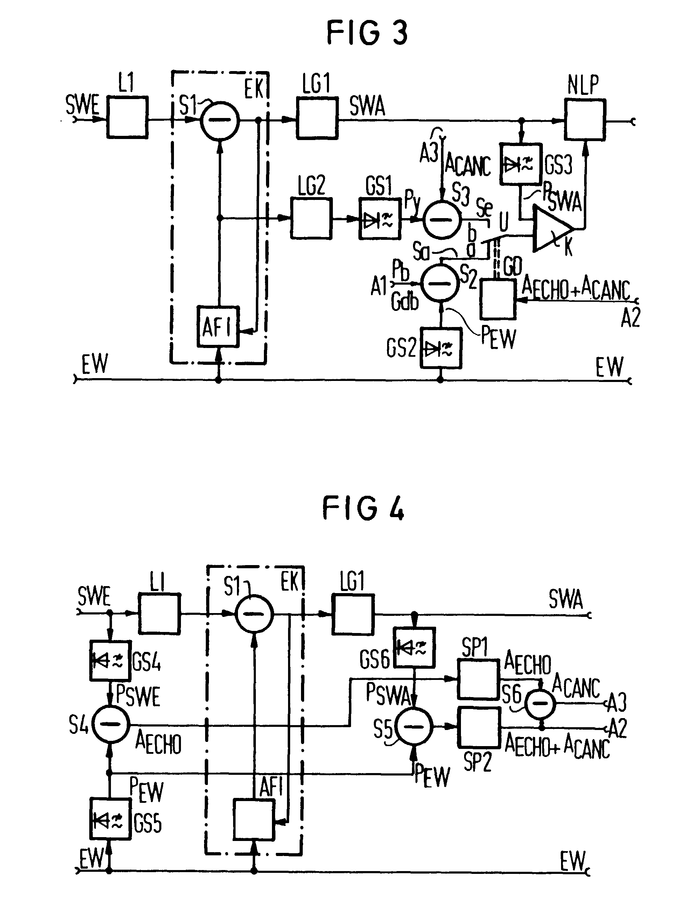

Figur 3 zeigt eine erfindungsgemäße Anordnung. Diese enthält einen Echokompensator EK mit einem Subtrahierer S1 und mit einem steuerbaren Digitalfilter AFI, einen Linearisierer LI, Logarithmierer LG1 und LG2, Gleichrichter- und Siebschaltungen GS1 bis GS3, weitere Subtrahierer S2 und S3, einen Umschalter U, einen Gesamtecho-Dämpfungsmesser GD, einen Komparator K und einen Restechobegrenzer NLP.

Die Wirkungsweise des Echokompensators EK wurde bereits anhand der Figur 1 beschrieben. Die Signale am Sendewegeingang SWE werden dem Minuend-Eingang des Subtrahierers S1 über den Linearisierer LI zugeführt. Am Ausgang der Reihenschaltung aus Logarithmierer LG1 und Gleichrichter- und Siebschaltung GS3 liegt ein Sendewegausgangspegel P_{SWA}, am Ausgang der Reihenschaltung aus Logarithmierer LG2 und Gleichrichter- und Siebschaltung GS1 ein künstlicher Echopegel P_{y} und am Ausgang der Gleichrichter- und Siebschaltung GS2 ein Empfangswegpegel P_{EW}. Die Gleichrichterschaltungen enthalten einen Zweiweggleichrichter und die Siebschaltungen einen Tiefpaß.

Ab einem Gesprächsbeginn wird im Subtrahierer S2 ein am Anschluß A1 anliegender definierter Pegel P_{D} von 6 db vom Empfangswegpegel P_{EW} abgezogen, wodurch sich eine anfängliche Restecho-Begrenzerschwelle Sₐ ergibt. Diese wird im Komparator K mit dem Sendewegausgangspegel P_{SWA} verglichen. Ist dieser größer als die anfängliche Restecho-Begrenzerschwelle Sₐ, dann wird der Restechobegrenzer NLP durch den Komparator K auf Durchgang geschaltet. Ist der Sendewegausgangspegel P_{SWA} dagegen kleiner als die anfängliche Restecho-Begrenzerschwelle Sₐ, dann wird der Durchgang des Restechobegrenzers NLP vom Komparator K gesperrt.

Der Gesamtecho-Dämpfungsmesser GD mißt gleichzeitig die am Anschluß A2 anliegende Gesamtechodämpfung A_{ECHO} + A_{CANC} und schaltet beim Erreichen eines 12-db-Dämpfungswerts den Umschalter U von der Stellung a in die Stellung b.

Im Subtrahierer S3 wird der Wert der Kompensatordämpfung A_{CANC} am Anschluß A3 vom künstlichen Echopegel P_{y} abgezogen, wodurch sich die endgültige Restecho-Begrenzerschwelle Sₑ ergibt. Diese wird jetzt im Komparator K anstelle der anfänglichen Restecho-Begrenzerschwelle Sₐ mit dem Sendewegausgangspegel P_{SWA} verglichen.

Die Ermittlung der Gesamtechodämpfung A_{ECHO} + A_{CANC} wird später anhand der Figur 4 und die Gewinnung der Kompensatordämpfung A_{CANC} anhand der Figuren 4 bis 6 erläutert.

Figur 2 zeigt unten vor der Umschaltzeit tₓ die gleichgerichteten und gesiebten Echosignale von den Reflexionen R₁ und R₂. Zur ersten Reflexion R₁ bildet sich eine anfängliche Restecho-Begrenzerschwelle Sₐ aus. Diese fehlt aber bei der zweiten Reflexion R₂ des Echosignals a₁(t). Nach dem Umschaltzeitpunkt tₓ ergeben sich die gleichen Echosignale. Die endgültige End-echo-Begrenzerschwelle Sₑ tritt jedoch sowohl für aie Reflexion R₁ als auch R₂ auf.

Figur 4 zeigt eine erste Variante der Anordnung zur Erzeugung von A_{CANC} und A_{ECHO} + A_{CANC}, die hinsichtlich des Echokompensators EK, des Linearisierers LI und des Logarithmierers LG1 mit der Anordnung nach Figur 3 übereinstimmt. Weiter sind Gleichrichter- und Siebschaltungen GS4 bis GS6, Subtrahierer S4 bis S6 und Speicher SP1 und SP2 vorhanden.

Mit der Gleichrichter- und Siebschaltung GS4 wird der Sendewegeingangspegel P_{SWE} und mit der Gleichrichter- und Siebschaltung GS5 der Empfangswegpegel P_{EW} ermittelt. Im Subtrahierer S4 wird der Sendewegeingangspegel P_{SWE} vom Empfangswegpegel P_{EW} abgezogen, wodurch sich der Wert der Echodämpfung A_{ECHO} ergibt. Dieser wird anschließend im Speicher SP1 gespeichert.

In der Gleichrichter- und Siebschaltung GS6 wird der Sendewegausgangspegel P_{SWA} ermittelt. Im Subtrahierer S5 wird dieser vom Empfangswegpegel P_{EW} abgezogen. Dadurch ergibt sich der Wert der Gesamtechodämpfung A_{ECHO} + A_{CANC}, die im Speicher SP2 gespeichert wird und am Ausgang A2 zur Verfügung steht, der mit dem Gesamtecho-Dämpfungsmesser GD in Figur 3 in Verbindung steht. Im Subtrahierer S6 wird die Echodämpfung A_{ECHO} von der Gesamtechodämpfung A_{ECHO} + A_{CANC} abgezogen, wodurch sich der Wert der Kompensatordämpfung A_{CANC} am Anschluß A3 einstellt. Dieser ist mit dem Subtrahend-Eingang des Subtrahierers S3 in Figur 3 verbunden.

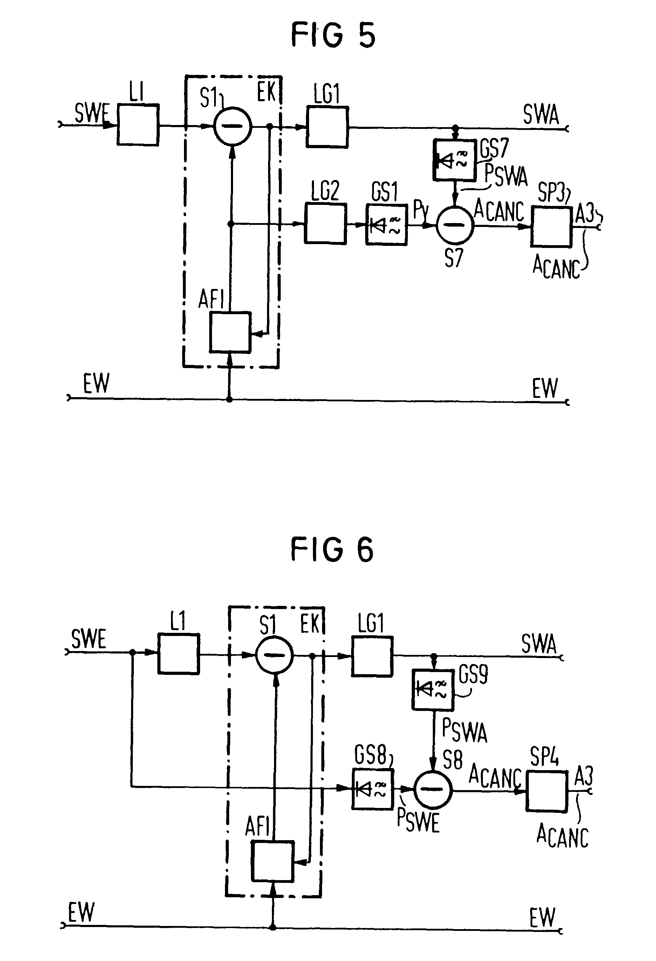

Figur 5 zeigt eine zweite Variante der Anordnung zur Erzeugung von A_{CANC} mit dem Echokompensator EK, dem Linearisierer LI, den Logarithmierern LG1 und LG2 sowie der Gleichrichter- und Siebschaltung GS1 wie in Figur 3. Weiter ist eine Gleichrichter- und Siebschaltung GS7, ein Subtrahierer S7 und ein Speicher SP3 vorgesehen. Von der Gleichrichter- und Siebschaltung GS1 wird ein künstlicher Echopegel P_{y} und von der Gleichrichter- und Siebschaltung GS7 der Sendewegausgangspegel P_{SWA} abgeleitet. Im Subtrahierer S7 wird dieser vom künstlichen Echopegel P_{y} abgezogen. Der sich ergebende Wert der Kompensatordämpfung A_{CANC} wird im Speicher SP1 gespeichert und am Anschluß A3 angeboten. Auch dieser kann mit dem Subtrahend-Eingang des Subtrahierers S3 in Figur 3 verbunden werden.

Figur 6 zeigt eine dritte Variante der Anordnung zur Erzeugung von A_{CANC} mit dem Echokompensator EK, dem Linearisierer LI und dem Logarithmierer LG1. Weiter sind Gleichrichter- und Siebschaltungen GS8 und GS9, ein Subtrahierer S8 und ein Speicher SP4 angeordnet.

Die Gleichrichter- und Siebschaltung GS8 liefert den Sendewegeingangspegel P_{SWE} und die Gleichrichter- und Siebschaltung GS9 den Sendewegausgangspegel P_{SWA}. Der Subtrahierer S8 zieht den Sendewegausgangspegel P_{SWA} vom Sendewegeingangspegel P_{SWE} ab und liefert damit den Wert der Kompensatordämpfung A_{CANC}.

Dieser wird im Speicher SP4 gespeichert und am Anschluß A3 angeboten, der wieder mit dem entsprechenden in Figur 3 verbindbar ist.

## Patentansprüche

1. Verfahren zur Steuerung eines hinter dem Sendewegausgang (SWA) eines Echokompensators angeordneten Restecho-Begrenzers (NLP),
bei dem von einem steuerbaren Digitalfilter (AFI) im Echokompensator ein künstlicher Echopegel (P_{y}) erzeugt wird,
bei dem eine Restecho-Begrenzerschwelle erzeugt wird,
bei dem der Sendewegausgangspegel (P_{SWA}) mit der Restecho-Begrenzerschwelle verglichen wird und
bei dem der Restecho-Begrenzer (NLP) mit dem Vorzeichen des Vergleichsergebnisses gesteuert wird,
**dadurch gekennzeichnet,**
daß am Anfang eines Gesprächs eine anfängliche Restecho-Begrenzerschwelle (Sₐ) durch Subtraktion eines definierten Pegelwertes (P_{D}) vom Empfangswegpegel (P_{EW}) oder von einem verzögerten Empfangswegpegel gebildet wird,
daß die anfängliche Restecho-Begrenzerschwelle (Sₐ) zum Vergleich herangezogen wird,
daß die Kompensatordämpfung (A_{CANC}) und die aus Kompensatordämpfung (A_{CANC}) und Echodämpfung (A_{ECHO}) bestehende Gesamtechodämpfung (A_{CANC} + A_{ECHO}) ab Gesprächsbeginn gemessen wird,
daß bei Erreichen eines definierten Gesamtecho-Dämpfungswerts eine endgültige Restecho-Begrenzerschwelle (Sₑ) durch Subtraktion der Kompensatordämpfung (A_{CANC}) von dem künstlichen Echopegel (P_{y}) gebildet wird und
daß die endgültige Restecho-Begrenzerschwelle (Sₑ) von diesem Zeitpunkt an bis zum Ende des Gesprächs anstelle der anfänglichen Restecho-Begrenzerschwelle (Sₐ) zum Vergleich herangezogen wird.

2. Verfahren nach Anspruch 1,
**dadurch gekennzeichnet,**
daß als definierter Pegelwert 6 dB gewählt wird.

3. Verfahren nach Anspruch 1,
**dadurch gekennzeichnet,**
daß als definierter Gesamtecho-Dämpfungswert 12 dB gewählt wird.

4. Verfahren nach Anspruch 1,
**dadurch gekennzeichnet,**
daß die Kompensatordämpfung (A_{CANC}) durch Subtraktion des Sendewegausgangspegel (P_{SWA}) vom künstlichen Echopegel (P_{y}) gebildet und anschließend gespeichert wird.

5. Verfahren nach Anspruch 1,
**dadurch gekennzeichnet,**
daß die Kompensatordämpfung (A_{CANC}) durch Subtraktion des Sendewegausgangspegels (P_{SWA}) vom Sendewegeingangspegel (P_{SWE}) gebildet und anschließend gespeichert wird.

6. Verfahren nach Anspruch 1,
**dadurch gekennzeichnet**,
daß die Gesamtechodämpfung (A_{ECHO} + A_{CANC}) durch Subtraktion des Sendewegausgangspegels (P_{SWA}) vom Empfangswegpegels (P_{EW}) gebildet wird,
daß die Echodämpfung durch Subtraktion des Sendewegeingangspegels (P_{SWE}) vom Empfangswegpegels (P_{EW}) gebildet wird und
daß die Kompensatordämpfung (A_{CANC}) durch Subtraktion der Echodämpfung (A_{ECHO}) von der Gesamtechodämpfung (A_{ECHO} + A_{CANC}) gebildet wird.

7. Echokompensator (EK) mit einem steuerbaren Digitalfilter (AFI) und einem ersten Subtrahierer (S1), dessen Ausgang ein erster Logarithmierer (LG1) und ein Restechobegrenzer (NLP) nachgeschaltet ist,
**dadurch gekennzeichnet,**
daß ein zweiter Subtrahierer (S2) vorgesehen ist, dessen Minuend-Eingang über einen Gleichrichter- und Siebschaltung (GS2) mit dem Empfangsweg (EW) verbunden ist und dessen Subtrahend-Eingang (Al) der Aufnahme eines definierten Pegels (P_{D}) dient,
daß ein dritter Subtrahierer (53) vorgesehen ist, dessen Minuend-Eingang über einen zweiten Logarithmierer (LG2) und eine erste Gleichrichter- und Siebschaltung (GS1) mit dem Ausgang des Digitalfilters (AFI) verbunden ist und dessen Subtrahend-Eingang (A3) der Aufnahme des Wertes der Kompensatordämpfung (A_{CANC}) dient,
daß ein Umschalter (U) vorgesehen ist, dessen erster Eingang (a) mit dem Ausgang des zweiten Subtrahierers (52) und dessen zweiter Eingang (b) mit dem Ausgang des dritten Subtrahierers (53) verbunden ist,
daß ein Gesamtecho-Dämpfungsmesser (GD) vorgesehen ist, dessen Steuereingang (A2) der Aufnahme der Gesamtechodämpfung (A_{ECHO} + A_{CANC}) dient und dessen Ausgang den Umschalter (U) steuert und
daß ein Komparator (K) vorgesehen ist, dessen erster Eingang mit dem Ausgang des Umschalters (U), dessen zweiter Eingang über eine dritte Gleichrichter- und Siebschaltung (GS3) mit dem Ausgang des ersten Logarithmierers (LG1) und dessen Ausgang mit einem Steuereingang des Restechobegrenzers (NLP) verbunden ist.

## Claims

1. Method for controlling a residual echo limiter (NLP) arranged downstream of the transmission path output (SWA) of an echo compensator, in which a controllable digital filter (AFI) in the echo compensator generates an artificial echo level (P_{y}), in which a residual echo limiter threshold is generated, in which the transmission path output level (P_{SWA}) is compared with the residual echo limiter threshold, and in which the residual echo limiter (NLP) is controlled by the sign of the result of comparison, characterized in that at the start of a call an initial residual echo limiter threshold (Sₐ) is formed by subtracting a defined level value (P_{D}) from the reception path level (P_{EW}) or from a delayed reception path level, in that the initial residual echo limiter threshold (Sₐ) is used for the comparison, in that the compensator loss (A_{CANC}) and the overall return loss (A_{CANC} + A_{ECHO}) comprising the compensator loss (A_{CANC}) and return loss (A_{ECHO}) is measured from the start of the call, in that a final residual echo limiter threshold (Sₑ) is formed by subtracting the compensator loss (A_{CANC}) from the artificial echo level (P_{y}) once a defined overall return loss value has been reached, and in that the final residual echo limiter threshold (Sₑ) is used from this instant on up to the end of the call instead of the initial residual echo limiter threshold (Sₐ) for the purpose of comparison.

2. Method according to Claim 1, characterized in that 6 dB is selected as the defined level value.

3. Method according to Claim 1, characterized in that 12 dB is selected as the defined overall return loss value.

4. Method according to Claim 1, characterized in that the compensator loss (A_{CANC}) is formed by subtracting the transmission path output level (P_{SWA}) from the artificial echo level (P_{y}) and is subsequently stored.

5. Method according to Claim 1, characterized in that the compensator loss (A_{CANC}) is formed by subtracting the transmission path output level (P_{SWA}) from the transmission path input level (P_{SWE}) and is subsequently stored.

6. Method according to Claim 1, characterized in that the overall return loss (A_{ECHO} + A_{CANC}) is formed by subtracting the transmission path output level (P_{SWA}) from the reception path level (P_{EW}), in that the return loss is formed by subtracting the transmission path input level (P_{SWE}) from the reception path level (P_{EW}), and in that the compensator loss (A_{CANC}) is formed by subtracting the return loss (A_{ECHO}) from the overall return loss (A_{ECHO} + A_{CANC}).

7. Echo compensator (EK) having a controllable digital filter (AFI) and a first subtractor (S1), whose output is connected downstream of a first logarithmation module (LG1) and a residual echo limiter (NLP), characterized in that a second subtractor (S2) is provided, whose minuend input is connected to the reception path (EW) via a rectifier and filter circuit (GS2) and whose subtrahend input (A1) serves to receive a defined level (P_{D}), in that a third subtractor (S3) is provided, whose minuend input is connected via a second logarithmation module (LG2) and a first rectifier and filter circuit (GS1) to the output of the digital filter (AFI), and whose subtrahend input (A3) serves to receive the value of the compensator loss (A_{CANC}), in that a changeover switch (U) is provided, whose first input (a) is connected to the output of the second subtractor (S2) and whose second input (b) is connected to the output of the third subtractor (S3), in that an overall return loss meter (GD) is provided, whose control input (A2) serves to receive the overall return loss (A_{ECHO} + A_{CANC}) and whose output controls the changeover switch (U), and in that a comparator (K) is provided, whose first input is connected to the output of the changeover switch (U), whose second input is connected via a third rectifier and filter circuit (GS3) to the output of the first logarithmation module (LG1) and whose output is connected to a control input of the residual echo limiter (NLP).

## Revendications

1. Procédé de commande d'un limiteur (NLP) d'écho résiduel monté en aval de la sortie (SWA) de voie d'émission d'un compensateur d'écho,
dans lequel on produit dans le compensateur d'écho un niveau (P_{y}) d'écho artificiel par un filtre (AFI) numérique pouvant être commandé,
dans lequel on produit un seuil du limiteur d'écho résiduel,
dans lequel on compare le niveau (P_{SWA}) de sortie de la voie d'émission au seuil du limiteur d'écho résiduel et
dans lequel on commande le limiteur (NLP) d'écho résiduel par le signe du résultat de la comparaison,
caractérisé en ce que, au début d'une conversation, on forme un seuil (Sₐ) initial du limiteur d'écho résiduel en soustrayant une valeur (P_{D}) de niveau défini du niveau (P_{EW}) de voie de réception ou d'un niveau de voie de réception retardé,
en ce que l'on utilise le seuil (Sₐ) initial du limiteur d'écho résiduel pour la comparaison,
en ce que l'on mesure après le début de la conversation l'affaiblissement (A_{CANC}) du compensateur et l'affaiblissement (A_{CANC} + A_{ECHO}) d'écho total, constitué de l'affaiblissement (A_{CANC}) du compensateur et de l'affaiblissement (A_{ECHO}) d'écho, en ce que, lorsqu'une valeur d'affaiblissement d'écho total définie est atteinte, on forme un seuil (Sₑ) définitif du limiteur d'écho résiduel en soustrayant l'affaiblissement (A_{CANC}) du compensateur du niveau (P_{y}) d'écho artificiel et
en ce que l'on utilise pour la comparaison, à partir de cet instant jusqu'à la fin de la conversation, le seuil (Sₑ) définitif du limiteur d'écho résiduel au lieu du seuil (Sₐ) initial du limiteur d'écho résiduel.

2. Procédé suivant la revendication 1, caractérisé en ce que l'on choisit 6 dB comme valeur définie de niveau.

3. Procédé suivant la revendication 1, caractérisé en ce que l'on choisit 12 dB comme valeur définie d'affaiblissement d'écho total.

4. Procédé suivant la revendication 1, caractérisé en ce que l'on forme l'affaiblissement (A_{CANC}) du compensateur en soustrayant le niveau (P_{SWA}) de sortie de voie d'émission du niveau (P_{y}) d'écho artificiel et on l'enregistre ensuite.

5. Procédé suivant la revendication 1, caractérisé en ce que l'on forme l'affaiblissement (A_{CANC}) du compensateur en soustrayant le niveau (P_{SWA}) de sortie de la voie d'émission du niveau (P_{SWE}) d'entrée de la voie d'émission et on l'enregistre ensuite.

6. Procédé suivant la revendication 1, caractérisé en ce que l'on forme l'affaiblissement (A_{ECHO} + A_{CANC}) d'écho total en soustrayant le niveau (P_{SWA}) de sortie de la voie d'émission du niveau (P_{EW}) de la voie de réception, en ce que l'on forme l'affaiblissement d'écho en soustrayant le niveau (P_{SWE}) d'entrée de la voie d'émission du niveau (P_{EW}) de la voie de réception et en ce que l'on forme l'affaiblissement (A_{CANC}) du compensateur en soustrayant l'affaiblissement (A_{ECHO}) d'écho de l'affaiblissement (A_{ECHO} + A_{CANC}) d'écho total.

7. Compensateur (EK) d'écho comportant un filtre (AFI) numérique pouvant être commandé et un premier soustracteur (SI), en aval de la sortie duquel est monté un premier formateur (LG1) de valeur logarithmique et un limiteur (NLP) d'écho résiduel, caractérisé en ce qu'il est prévu un deuxième soustracteur (S2) dont l'entrée de diminuendes est reliée à la voie (EW) de réception par l'intermédiaire d'un circuit (GS2) redresseur et de filtrage et dont l'entrée (A1) de terme dont on soustrait sert à la réception d'un niveau (P_{D}) défini, en ce qu'il est prévu un troisième soustracteur (S3), dont l'entrée de diminuendes est reliée à la sortie du filtre (AFI) numérique par l'intermédiaire d'un deuxième formateur (LG2) de valeur logarithmique et d'un premier circuit (GS1) redresseur et de filtrage et dont l'entrée (A3) de terme dont on soustrait sert à la réception de la valeur de l'affaiblissement (A_{CANC}) du compensateur, en ce qu'il est prévu un commutateur (U) dont la première entrée (a) est reliée à la sortie du deuxième soustracteur (S2) et dont la deuxième entrée (b) est reliée à la sortie du troisième soustracteur (S3), en ce qu'il est prévu un dispositif (GD) de mesure d'affaiblissement d'écho total dont l'entrée (A2) de commande sert à la réception de l'affaiblissement (A_{ECHO} + A_{CANC}) d'écho total et dont la sortie commande le commutateur (U) et en ce qu'il est prévu un comparateur (K) dont la première entrée est reliée à la sortie du commutateur (U), dont la deuxième entrée est reliée à la sortie du premier formateur (LG1) de valeur logarithmique par l'intermédiaire d'un troisième circuit (GS3) redresseur et de filtrage et dont la sortie est reliée à une entrée de commande du limiteur (NLP) d'écho résiduel.
